# FASCICULE DE BREVET EUROPEEN

(11) **EP 3 718 615 B1**
(45) Date de publication et mention de la délivrance du brevet: **22.12.2021**
(21) Numéro de dépôt: 20164112.3
(22) Date de dépôt: 19.03.2020
(51) Int. Cl.: A63G 7/00, B60N 2/24, B60N 2/42, B60N 2/427, B60N 2/50, B60N 2/68, B60N 2/52

(54) **SYSTÈME DE MAINTIEN DE PASSAGER POUR MONTAGNES RUSSES**
PASSAGIERRÜCKHALTESYSTEM FÜR ACHTERBAHNEN
PASSENGER RESTRAINT SYSTEM FOR ROLLER COASTERS

(30) Priorité: 22.03.2019 EP 19164728
(43) Date de publication de la demande: 07.10.2020
(73) Titulaire: Bolliger & Mabillard Ingénieurs Conseils S.A., 1870 Monthey (CH)
(72) Inventeur: ZÜRCHER, Alain, 1142 Pampigny (CH); BERRA, Eric, 1870 Monthey (CH)
(74) Mandataire: Noll, Ronald

(56) Documents cités:
- WO-A1-2007/136245
- WO-A1-2010/055531
- JP-A- S 592 782
- US-A- 4 531 459

## Description

### DOMAINE TECHNIQUE

La présente invention se rapporte de manière générale à un système de maintien de passager pour montagnes russes, et plus précisément un tel système de maintien de passager conçu afin de maintenir un passager en posture essentiellement verticale (debout) lors d'un parcours sur les montagnes russes.

### ARRIÈRE-PLAN TECHNOLOGIQUE

De tels systèmes de maintien de passager sont connus dans l'état de la technique et sont notamment utilisés dans diverses installations de montagnes russes en position verticale (ou « stand-up roller coasters »), tel « The Riddler's Revenge » du parc « Six Flags Magic Mountain » localisé à Valencia près de Santa Clarita en Californie, installation conçue par la présente Déposante.

Le brevet américain No. US 4,531,459 A décrit plusieurs variantes de systèmes de maintien de passager en posture essentiellement verticale pour montagnes russes. Selon une première variante de réalisation illustrée dans les Figures 1 à 9 de ce brevet US 4,531,459 A, le système de maintien comprend un dispositif de retenue comprenant un cadre de support ajustable en hauteur, lequel est déplaçable verticalement, via des glissières, le long d'une colonne fixe, solidaire à sa base au châssis du véhicule destiné à circuler sur les montagnes russes. Le cadre de support est ajustable en hauteur à la taille du passager et est verrouillable à la position souhaitée au moyen d'un vérin de blocage hydraulique. L'équilibrage du dispositif de retenue est assuré par un ressort à gaz. Le cadre de support porte un dossier incurvé destiné à supporter le dos et les hanches du passager, un appui-tête, une selle, une paire de harnais pivotables latéralement, ainsi qu'un élément de retenue abdominal pivotable configuré pour venir en appui contre l'abdomen du passager. Le vérin de blocage hydraulique comporte des chambres hydrauliques supérieure et inférieure couplées à un accumulateur via un circuit hydraulique comportant une électrovanne disposée entre l'accumulateur et la chambre hydraulique supérieure du vérin de blocage hydraulique. Un réservoir d'appoint est par ailleurs relié à la chambre hydraulique supérieure du vérin de blocage hydraulique. Lorsque l'électrovanne est activée, le fluide hydraulique peut circuler entre les chambres hydrauliques supérieure et inférieure du vérin de blocage hydraulique, autorisant ainsi un déplacement vertical du cadre de support, et donc un ajustement du dispositif de retenue à la taille du passager. Une fois sa position ajustée à la taille du passager, le cadre de support est verrouillé en un point de verrouillage par fermeture de l'électrovanne, empêchant tout transit de fluide hydraulique entre les chambres hydrauliques supérieure et inférieure du vérin de blocage hydraulique. Dans cette position verrouillée, le dispositif de retenue ne peut dès lors bouger par rapport au point de verrouillage. Cependant, en cas de forte charge, par exemple lors de l'application d'une force de gravité excessive due à une forte accélération verticale, le piston du vérin de blocage hydraulique, qui reste normalement immobile dans des conditions normales, est susceptible de s'abaisser, causant un transfert de fluide hydraulique de la chambre hydraulique inférieure du vérin de blocage hydraulique vers l'accumulateur. Dans un même temps, du fluide hydraulique est fourni par le réservoir d'appoint vers la chambre hydraulique supérieure du vérin de blocage hydraulique. Dès lors que la forte charge est interrompue, le piston du vérin de blocage hydraulique est renvoyé à sa position antérieure par l'action de l'accumulateur qui contraint le fluide hydraulique à retourner dans la chambre hydraulique inférieure du vérin de blocage hydraulique. Cet agencement permet ainsi un amortissement en cas de forte charge, mais n'autorise aucun déplacement du vérin de blocage hydraulique, et donc du dispositif de retenue, en conditions normales, excepté lors de la phase d'embarquement, lorsque l'électrovanne est activée pour libérer le vérin de blocage hydraulique et permettre un ajustement à la taille du passager. Cette solution n'offre donc qu'un confort limité lors du parcours sur les montagnes russes.

Le brevet suisse No. CH 664 502 A5 décrit un système de maintien de passager en posture essentiellement verticale comprenant un dispositif de retenue constitué d'une luge équilibrée par un ressort à gaz, laquelle luge est conçue pour glisser verticalement, au moyen de quatre paliers, le long de deux colonnes qui sont fixées par leur base au châssis du véhicule destiné à circuler sur les montagnes russes. La luge est verrouillable, de préférence mécaniquement, à n'importe quelle hauteur des colonnes suivant la taille du passager. Sur la luge est fixée une selle rembourrée en forme de baquet pour soutenir le passager. La luge porte par ailleurs un dossier intégrant un appui-tête, une tenue latérale, ainsi qu'une paire de harnais montés de part et d'autre du dossier, dont un harnais fixe et un harnais mobile, monté pivotant, équipé d'une barre ventrale. Pour l'ajustement en hauteur du système de maintien à la taille du passager, la luge est positionnée de manière à ce que la selle se trouve dans la position la plus haute possible entre les jambes du passager concerné, le dos appuyé contre le dossier et une épaule et un bras engagés dans le harnais fixe. Dans cette position verticale, la luge est verrouillée sur les colonnes par un dispositif de verrouillage, et le harnais mobile est abaissé jusqu'à ce que la barre ventrale vienne se positionner contre l'abdomen du passager, pour enfin être verrouillée. Cette solution, bien que robuste, n'offre toutefois qu'un confort limité lors du parcours sur les montagnes russes, à l'image des solutions décrites dans le brevet US 4,531,459 A susmentionné.

La demande internationale (PCT) No. WO 2007/136245 A1 décrit un système de maintien de passager comprenant un dispositif de retenue configuré pour venir en prise avec la moitié supérieure du corps du passager et assurer sa retenue, le dispositif de retenue étant raccordé par des moyens de raccordement à une structure de support. Les moyens de raccordement sont conçus pour permettre au passager de réaliser des mouvements durant le parcours sur les montagnes russes tout en étant retenu par le dispositif de retenue. Ce système de maintien a notamment pour objectif de permettre au passager d'effectuer des mouvements entre une position debout et une position accroupie, ainsi qu'un mouvement de rotation vers l'avant du torse du passager, et, le cas échéant, un mouvement latéral du torse du passager. L'on comprendra dès lors que le dispositif de retenue n'est pas verrouillé dans une position déterminée, mais au contraire libre de bouger dans plusieurs directions selon l'impulsion donnée par le passager. Ce système de maintien présente l'inconvénient de nécessiter une structure articulée très complexe pour soutenir le dispositif de retenue et permettre au passager d'effectuer les divers mouvements susmentionnés, ce qui se traduit par des coûts de fabrication et de maintenance accrus qui rendent cette solution peu applicable en pratique. Par ailleurs, la liberté de mouvement octroyée au passager conduit de facto à une tenue insuffisante du passager lors du parcours sur les montagnes russes, laquelle se traduit par un trop grand sentiment d'insécurité, ce qui n'est pas souhaitable.

Il subsiste donc un besoin de proposer un système de maintien de passager en posture essentiellement verticale qui remédie aux problèmes et limitations des solutions connues.

### EXPOSÉ DE L'INVENTION

Un but général de la présente invention est donc de proposer un système de maintien de passager en posture essentiellement verticale qui remédie aux inconvénients des solutions connues.

Plus particulièrement, un but de la présente invention est de proposer une telle solution qui garantisse à la fois une retenue adéquate du passager tout en assurant un meilleur confort au passager lors du parcours sur les montagnes russes.

Par ailleurs, un but de la présente invention est de proposer une telle solution qui soit robuste et raisonnablement simple à mettre en œuvre.

Un autre but de la présente invention est de proposer une telle solution qui soit fiable et dont la maintenance est facilitée.

Eu égard aux buts susmentionnés, il est proposé, selon un premier aspect de la présente invention, un système de maintien de passager pour montagnes russes dont les caractéristiques sont énumérées dans la revendication 1, à savoir un tel système de maintien de passager conçu afin de maintenir un passager en posture essentiellement verticale, le système de maintien de passager comprenant une colonne fixe et une colonne de siège conçue pour soutenir et retenir le passager, laquelle colonne de siège est couplée à la colonne fixe de manière à pouvoir être déplacée par rapport à la colonne fixe et être ajustée à la taille du passager lors d'une phase d'embarquement. Selon ce premier aspect de l'invention, la colonne de siège est couplée à la colonne fixe au moyen d'une liaison articulée et le système de maintien de passager comporte en outre un dispositif assurant l'équilibrage de la colonne de siège, lequel dispositif d'équilibrage comprend un vérin fixé, à une première extrémité articulée, à la colonne fixe et, à une seconde extrémité articulée, à la colonne de siège.

Selon ce premier aspect de l'invention, et contrairement aux solutions connues, l'on notera donc que la colonne de siège n'est pas montée directement sur la colonne fixe de manière à coulisser selon une direction sensiblement verticale, ce qui nécessite un guidage au moyen de glissières ou autres paliers montés de manière à coulisser le long d'une ou plusieurs colonnes faisant office de guidage, mais par l'intermédiaire d'une liaison articulée qui offre un mouvement plus aisé ainsi qu'une plus grande douceur et souplesse de déplacement, notamment lors de l'ajustement en hauteur à la taille du passager. Cette liaison articulée est au demeurant plus simple et plus compacte que les solutions connues.

Selon un mode de réalisation particulièrement préféré, la liaison articulée comporte un jeu de leviers articulés sur la colonne fixe et sur la colonne de siège et formant une liaison parallélogramme entre la colonne fixe et la colonne de siège. Ceci assure un guidage optimal de la colonne de siège sur la colonne fixe, garantissant par ailleurs que l'orientation de la colonne de siège par rapport à une direction verticale reste inchangée, indépendamment de l'ajustement en hauteur de la colonne de siège.

Préférablement, le vérin s'étend au travers d'un espace intercalaire de la liaison articulée, ce qui conduit à un agencement particulièrement compact.

De manière avantageuse, le vérin peut en particulier être un vérin hydraulique assurant également, au-delà de l'équilibrage de la colonne de siège, le blocage sélectif de la colonne de siège en un point de verrouillage. Cette solution permet dès lors de s'affranchir de l'utilisation d'un élément d'équilibrage ad hoc, tel un ressort à gaz, le vérin hydraulique remplissant ici deux fonctions, à savoir assurer l'équilibrage de la colonne de siège et permettre le blocage sélectif de la colonne de siège en fonction de la taille du passager.

Dans ce dernier contexte, le système de maintien de passager peut en outre comporter un dispositif hydraulique couplé au vérin hydraulique et configuré pour assurer un débattement contrôlé du vérin hydraulique, et ainsi de la colonne de siège, par rapport au point de verrouillage.

Ce dernier aspect constitue au demeurant un autre aspect de l'invention qui est applicable indépendamment de la manière avec laquelle la colonne de siège est couplée à la colonne fixe. Ainsi, selon un second aspect de la présente invention, il est également proposé un système de maintien de passager pour montagnes russes dont les caractéristiques sont énumérées dans la revendication indépendante 6, à savoir un tel système de maintien de passager conçu afin de maintenir un passager en posture essentiellement verticale, le système de maintien de passager comprenant une colonne fixe et une colonne de siège conçue pour soutenir et retenir le passager, laquelle colonne de siège est couplée à la colonne fixe de manière à pouvoir être déplacée par rapport à la colonne fixe et être ajustée à la taille du passager lors d'une phase d'embarquement. Selon ce second aspect de l'invention, le système de maintien de passager comporte en outre (i) un vérin hydraulique assurant l'équilibrage de la colonne de siège ainsi que le blocage sélectif de la colonne de siège en un point de verrouillage, lequel vérin hydraulique est fixé, à une première extrémité, à la colonne fixe et, à une seconde extrémité, à la colonne de siège, et (ii) un dispositif hydraulique couplé au vérin hydraulique et configuré pour assurer un débattement contrôlé du vérin hydraulique, et ainsi de la colonne de siège, par rapport au point de verrouillage.

Eu égard à l'utilisation du vérin hydraulique susmentionné pour l'équilibrage de la colonne de siège, le système de maintien de passager comporte en outre de préférence un accumulateur couplé au vérin hydraulique, lequel accumulateur est apte à générer une pression hydraulique nécessaire à l'équilibrage du poids de la colonne de siège. Cet accumulateur peut en particulier être un accumulateur hydropneumatique.

Dans ce dernier contexte, l'accumulateur est préférablement couplé à des chambres hydrauliques supérieure et inférieure du vérin hydraulique, l'accumulateur étant couplé à la chambre hydraulique supérieure du vérin hydraulique via une première électrovanne et à la chambre hydraulique inférieure du vérin hydraulique via une seconde électrovanne. Ces première et seconde électrovannes sont activables, lors de la phase d'embarquement du passager, afin de permettre le passage de fluide hydraulique de la chambre hydraulique inférieure à la chambre hydraulique supérieure du vérin hydraulique, et inversement, plaçant ainsi le vérin hydraulique en configuration déverrouillée autorisant l'ajustement de la colonne de siège à la taille du passager. À l'inverse, ces première et seconde électrovannes sont désactivables afin d'empêcher le passage de fluide hydraulique de la chambre hydraulique inférieure à la chambre hydraulique supérieure du vérin hydraulique, et inversement, plaçant ainsi le vérin hydraulique en configuration verrouillée.

Les première et seconde électrovannes susmentionnées sont de préférence pourvue chacune d'un clapet antiretour permettant au fluide hydraulique de circuler de l'accumulateur vers la chambre hydraulique supérieure ou la chambre hydraulique inférieure du vérin hydraulique lorsque les première et seconde électrovannes sont désactivées.

Eu égard au débattement contrôlé du vérin hydraulique, et de la colonne de siège, le dispositif hydraulique comporte préférablement un vérin flottant comprenant un piston flottant et des chambres hydrauliques supérieure et inférieure disposées de part et d'autre du piston flottant, lesquelles sont reliées aux chambres hydrauliques supérieure et inférieure du vérin hydraulique de manière à permettre, lorsque le vérin hydraulique est en configuration verrouillée, le passage du fluide hydraulique du vérin hydraulique au vérin flottant et inversement, le piston flottant présentant une amplitude de mouvement et une capacité déterminant l'amplitude du débattement contrôlé du vérin hydraulique et de la colonne de siège.

Dans ce dernier contexte, le dispositif hydraulique peut par ailleurs comporter une chambre d'équilibrage soumettant le piston flottant à la même pression hydraulique que celle de l'accumulateur.

Selon une variante préférée, le dispositif hydraulique comporte en outre au moins un élément de rappel exerçant une force de rappel sur le piston flottant, tels un ressort de compression, un ressort en élastomère ou un ressort pneumatique, ce de manière à permettre de rappeler le piston flottant dans une position de départ déterminée lors de la phase d'embarquement. En particulier, le dispositif hydraulique peut comporter un unique élément de rappel agencé de sorte à rappeler le piston flottant en une position basse lors de la phase d'embarquement. Alternativement, le dispositif hydraulique peut comporter deux éléments de rappel opérant en opposition et agencés de sorte à rappeler le piston flottant en une position intermédiaire, entre des positions haute et basse, lors de la phase d'embarquement.

Le système de maintien de passager peut encore avantageusement comporter un régleur de débit placé sur le passage du fluide hydraulique entre le vérin hydraulique et le vérin flottant, de sorte à pouvoir ajuster la vitesse de déplacement du piston du vérin hydraulique, et donc de la colonne de siège, en configuration verrouillée. Ce régleur de débit peut en particulier être placé dans un conduit reliant la chambre hydraulique inférieure du vérin hydraulique à la chambre hydraulique inférieure du vérin flottant.

Enfin, le système de maintien de passager peut en outre comporter des moyens configurés de sorte à amortir le débattement contrôlé du vérin hydraulique, et ainsi limiter les risques de choc lorsque le système arrive en butée.

Sont également revendiqués, des montagnes russes (ou « roller coaster ») comprenant au moins un système de maintien de passager selon l'invention.

D'autres aspects de l'invention sont exposés dans la suite de la présente description.

### DESCRIPTION SOMMAIRE DES DESSINS

Les caractéristiques et avantages de la présente invention apparaîtront plus clairement à la lecture de la description détaillée qui suit de divers modes de réalisation de l'invention, lesquels sont présentés uniquement à titre d'exemples non limitatifs et sont illustrés par les dessins annexés où :
- la Figure 1 est une vue latérale d'un système de maintien de passager selon un mode de réalisation de l'invention ;
- la Figure 1A est une vue latérale du système de maintien de passager de la Figure 1 illustrant un débattement contrôlé dudit système de maintien en configuration verrouillée ;
- la Figure 2 est une illustration en perspective du système de maintien de passager selon la Figure 1 ;
- la Figure 3 est un schéma du système hydraulique équipant le système de maintien de passager de la Figure 1 ;
- la Figure 4 est une vue en perspective arrière du système hydraulique équipant le système de maintien de passager de la Figure 1 ;
- la Figure 4A est une vue arrière du système hydraulique de la Figure 4 ; et
- la Figure 4B est une vue en coupe du système hydraulique de la Figure 4 prise selon le plan de coupe A-A reporté sur la Figure 4A.

### MODES DE RÉALISATION DE L'INVENTION

La présente invention sera décrite en référence à divers modes de réalisation préférés tels qu'illustrés notamment dans les Figures annexées.

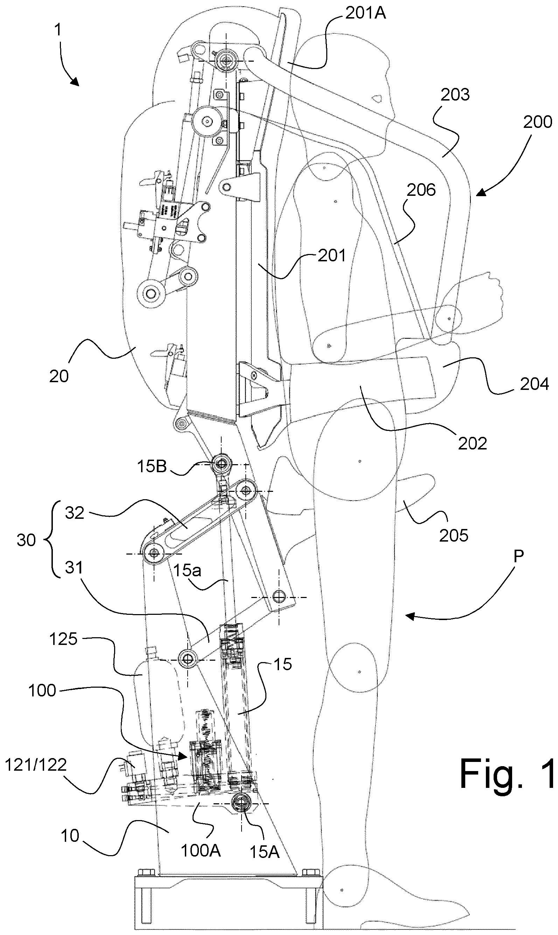

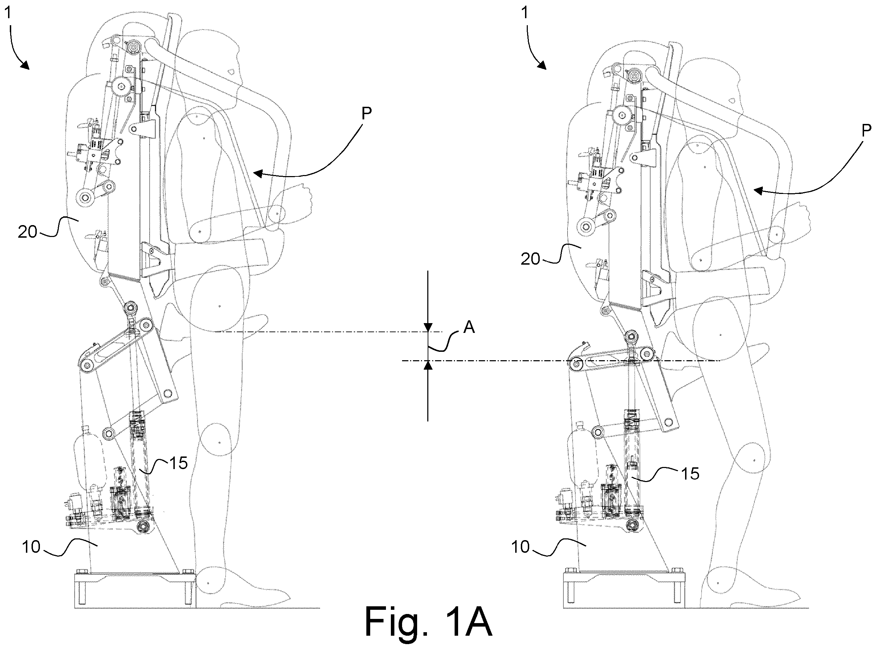

La Figure 1 montre une vue latérale d'un système de maintien de passager pour montagnes russes, lequel système est désigné globalement par la référence numérique 1, selon un mode de réalisation de l'invention. Ce système de maintien de passager 1 est conçu afin de maintenir un passager, également illustré, schématiquement, dans la Figure 1 et désigné par la référence P, lequel passager P est supporté et retenu par le système de maintien de passager 1.

Le système de maintien de passager 1 comporte une colonne fixe 10 qui est classiquement fixée par sa base sur une plateforme sur laquelle le passager P se tient en position debout. Cette plateforme fait typiquement partie d'un véhicule (non représenté) conçu pour se déplacer sur les montagnes russes. Le passager P est soutenu et retenu par une colonne de siège 20, laquelle est couplée à la colonne fixe 10 de manière à pouvoir être déplacée par rapport à la colonne fixe 10 et être ajustée à la taille du passager P lors d'une phase d'embarquement.

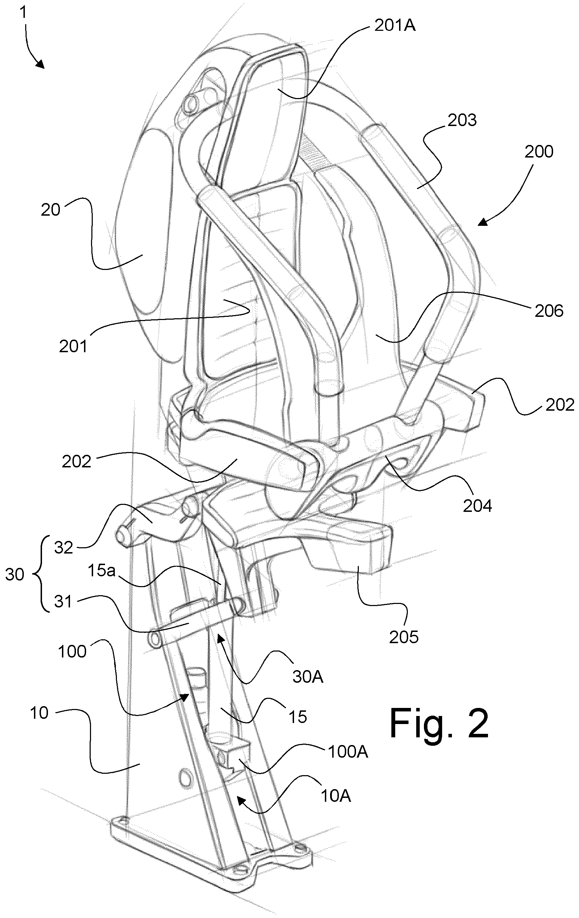

La colonne de siège 20 est pourvue d'un dispositif de retenue 200 configuré pour coopérer avec la moitié supérieure du corps du passager P, lequel dispositif de retenue 200 peut prendre diverses formes. Selon le mode de réalisation illustré à titre d'exemple illustratif dans la Figure 1 et dans la Figure 2, le dispositif de retenue 200 comprend pour l'essentiel un dossier 201 fixé à la colonne de siège 20, contre lequel le passager P peut prendre appui, dos et hanches placés contre le dossier 201, lequel dossier 201 est par ailleurs pourvu d'un appui-tête 201A et d'une paire d'éléments de retenue latéraux 202 configurés pour enserrer le passager P au niveau des hanches. Le dispositif de retenue 200 comporte par ailleurs une barre de sécurité frontale 203, montée pivotante sur une partie supérieure de la colonne de siège 20, et conçue pour être abaissée au-dessus des épaules et devant le torse du passager P. Cette barre de sécurité frontale 203 comporte ici, sur son extrémité distale, un élément de retenue abdominal 204 qui vient donc en appui contre l'abdomen du passager P lorsque la barre de sécurité frontale 203 est abaissée. Cette barre de sécurité est typiquement verrouillée en position, une fois positionnée sur l'abdomen du passager par un dispositif de verrouillage adéquat. Le dispositif de retenue 200 comprend en outre une selle 205, préférablement rembourrée, montée sur la partie inférieure de la colonne de siège 20 et conçue pour venir se placer entre les jambes et sous les fesses du passager P afin de le supporter dans la posture essentiellement verticale illustrée. Le dispositif de retenue 200 illustré comprend encore un harnais intégral 206 monté, à une extrémité, sur la partie supérieure de la colonne de siège 20, au-dessus du niveau des épaules du passager P et, à une autre extrémité, sur l'élément de retenue abdominal 204 placée sur la barre de sécurité frontale 203. Le harnais intégral 206 est ainsi abaissé sur les épaules du passager P lors de l'abaissement de la barre de sécurité frontale 203, retenant dès lors le passager P par les épaules.

L'on comprendra que l'invention n'est pas spécifiquement limitée à un système de maintien de passager comportant un dispositif de retenue 200 tel que spécifiquement illustré, d'autres configurations de dispositifs de retenue étant parfaitement envisageables.

Selon un premier aspect de l'invention, la colonne de siège 20 est couplée à la colonne fixe 10 au moyen d'une liaison articulée désignée par la référence numérique 30 et le système de maintien de passager 1 comporte en outre un dispositif assurant l'équilibrage de la colonne de siège 20. Ce dispositif d'équilibrage comprend notamment un vérin 15 fixé, à une première extrémité articulée 15A, à la colonne fixe 10 et, à une seconde extrémité articulée 15B, à la colonne de siège 20. Dans la variante de réalisation préférée illustrée, la référence 15a désigne un piston du vérin 15, solidaire, à l'extrémité articulée 15B, de la colonne de siège 20.

La liaison articulée 30 peut prendre des formes variées. A titre préféré, comme illustré, cette liaison articulée 30 comporte un jeu de leviers, respectivement inférieurs 31 et supérieurs 32, formant avantageusement une liaison parallélogramme entre la colonne fixe 10 et la colonne de siège 20. Plus précisément, la liaison articulée 30 comprend ici une paire de leviers inférieurs 31 articulés à chaque extrémité à la colonne fixe 10, d'une part, et à la colonne de siège 20, d'autre part. De même, la liaison articulée 30 comprend une paire de leviers supérieurs 32, dont la longueur effective est identique à la longueur effective des leviers inférieurs 31, lesquels leviers supérieurs 32 sont de même articulés à chaque extrémité à la colonne fixe 10, d'une part, et à la colonne de siège 20, d'autre part.

L'on pourra immédiatement relever la configuration très compacte de la liaison articulée 30. La géométrie de la liaison articulée 30 est préférablement choisie de manière à ce que la colonne de siège 20 puisse se déplacer selon une trajectoire essentiellement verticale, étant toutefois relevé que la liaison parallélogramme induit un mouvement relatif entre la colonne fixe 10 et la colonne de siège 20 selon une trajectoire en arc de cercle, l'amplitude du mouvement, lors de la phase d'embarquement, étant déterminée par l'amplitude de travail effective du vérin 15. A ce titre la Figure 1 montre le système de maintien 1 dans une configuration où la colonne de siège 20 est placée dans une position haute, le vérin 15 étant illustré dans une position où le piston 15a est presque entièrement déployé.

Les extrémités 15A, 15B du vérin 15 sont ici articulées, en ce sens que le vérin 15 subit un léger mouvement en rotation autour d'un axe coïncidant avec l'extrémité inférieure 15A du vérin 15 en fonction du positionnement de la colonne de siège 20 par rapport à la colonne fixe 10, engendrant un mouvement relatif correspondant du vérin 15 par rapport à la colonne fixe 10 et à la colonne de siège 20.

A titre avantageux, le vérin 15 s'étend au travers d'un espace intercalaire 30A (voir Figure 2) de la liaison articulée 30, à savoir au travers de l'espace formé entre les leviers inférieurs 31 et entre les leviers supérieurs 32.

L'utilisation d'une liaison articulée entre la colonne fixe 10 et la colonne de siège 20, telle la liaison articulée 30 illustrée dans les Figures 1 et 2, offre un mouvement plus aisé ainsi qu'une plus grande douceur et souplesse de déplacement, notamment lors de l'ajustement en hauteur à la taille du passager P. Cette liaison articulée est au demeurant plus simple et plus compacte que les solutions de l'état de la technique et facilite la maintenance du fait de la réduction du nombre de pièces d'usure.

Selon le mode de réalisation illustré, l'on relèvera que le vérin 15 est préférablement un vérin hydraulique assurant également le blocage sélectif de la colonne de siège 20 en un point de verrouillage. En d'autres termes, le vérin hydraulique 15 remplit ici deux fonctions, à savoir assurer l'équilibrage de la colonne de siège 20 et permettre le blocage sélectif de la colonne de siège 20 en fonction de la taille du passager P, solution qui permet ainsi de s'affranchir de l'utilisation d'un élément d'équilibrage ad hoc, tel un ressort à gaz.

Plus avantageusement encore, selon un autre aspect de l'invention qui est applicable indépendamment de la liaison articulée susmentionnée, le système de maintien de passager 1 comporte en outre un dispositif hydraulique 100 couplé au vérin hydraulique 15 et configuré pour assurer un débattement contrôlé du vérin hydraulique 15, et ainsi de la colonne de siège 20, par rapport au point de verrouillage. Ce débattement contrôlé vise à permettre au passager P d'effectuer un mouvement contrôlé et dont l'amplitude est limitée et déterminée. La résultante de ce débattement contrôlé est illustrée schématiquement dans la Figure 1A où l'on peut voir le même passager P dans deux positions extrêmes, système de maintien 1 en configuration verrouillée, la référence A désignant l'amplitude effective du débattement autorisé par le dispositif hydraulique 100. Etant donné que, contrairement aux solutions connues, la colonne de siège 20 n'est pas verrouillée en une position de verrouillage déterminée, l'on peut parler ici d'un verrouillage « flottant ».

Selon le mode de réalisation discuté, la position verrouillée « haute » illustrée dans la partie gauche de la Figure 1A correspond à la position dans laquelle le passager P a positionné la colonne de siège 20 au moment du blocage de la colonne de siège 20, un mouvement vers le bas de la colonne de siège 20, d'une amplitude maximale A, étant rendu possible. Le débattement contrôlé peut toutefois être mise en oeuvre de toute autre manière, par exemple de sorte à ce que le passager P puisse effectuer des mouvements vers le haut et vers le bas autour du point de verrouillage, toujours sur une amplitude maximale A. Ceci apparaîtra plus clairement à la lecture de ce qui suit.

Comme déjà mentionné ci-dessus, le débattement contrôlé du vérin hydraulique 15 par rapport au point de verrouillage peut être mis en œuvre indépendamment de l'utilisation d'une liaison articulée entre la colonne fixe 10 et la colonne de siège 20. A titre d'exemple alternatif, le débattement contrôlé du vérin hydraulique 15 pourrait de même être mis en oeuvre dans le cadre d'un système de maintien à colonne à l'image de ce qui est décrit dans le brevet US 4,531,459 A mentionné en préambule, sous réserve d'opérer les adaptations nécessaires du dispositif hydraulique couplé au vérin hydraulique, telles que discutées plus bas.

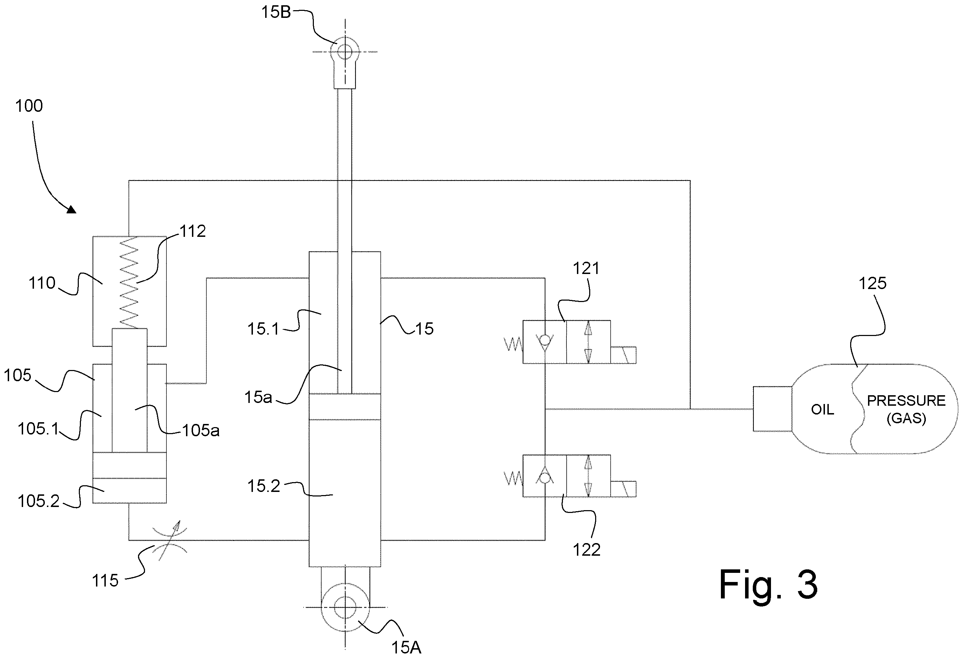

La Figure 3 est un schéma du système hydraulique équipant le système de maintien de passager 1 de la Figure 1 selon une variante de réalisation particulièrement préférée de l'invention. Comme l'on peut le voir sur la Figure 3, le système hydraulique associé au vérin hydraulique 15, également représenté sur la Figure 3 comporte notamment un accumulateur 125 (également visible sur la Figure 1) couplé au vérin hydraulique 15, lequel accumulateur 125 est apte à générer une pression hydraulique nécessaire à l'équilibrage du poids de la colonne de siège 20. Cet accumulateur 125 peut notamment être un accumulateur hydropneumatique, en particulier un accumulateur hydropneumatique du type à vessie, laquelle est remplie d'un gaz (par exemple de l'azote) qui agit comme fluide compressible et permet d'accumuler de l'énergie. Dans le cas d'espèce, cette énergie accumulée est exploitée pour générer la pression hydraulique nécessaire à l'équilibrage du poids de la colonne de siège 20, à savoir pour compenser la force exercée sur le vérin hydraulique 15 par le poids de la colonne de siège 20 est ainsi faciliter l'ajustement en hauteur de la colonne de siège 20 lors de la phase d'embarquement. Dans les solutions connues, cet équilibrage est normalement réalisé au moyen d'un ressort à gaz.

Comme illustré dans la Figure 3, l'accumulateur 125 est avantageusement couplé à des chambres hydrauliques supérieure 15.1 et inférieure 15.2 du vérin hydraulique 15, l'accumulateur 125 étant couplé à la chambre hydraulique supérieure 15.1 via une première électrovanne 121 et à la chambre hydraulique inférieure 15.2 via une seconde électrovanne 122. Lors de la phase d'embarquement, les électrovannes 121, 122 sont activées (ouvertes), permettant au fluide hydraulique de circuler de la chambre hydraulique inférieure 15.2 à la chambre hydraulique supérieure 15.1, et vice versa, autorisant le passager P à déplacer la colonne de siège 20, causant un déplacement du piston 15a à l'intérieur du vérin hydraulique 15. Une fois la phase d'embarquement terminée, les électrovannes 121, 122 peuvent être refermées (désactivées) afin d'empêcher tout transit de fluide hydraulique entre les chambres hydrauliques supérieure 15.1 et inférieure 15.2 du vérin hydraulique 15, plaçant ainsi le vérin hydraulique 15 en configuration verrouillée. Dans cette configuration, et en l'absence du dispositif hydraulique complémentaire 100 détaillé plus amplement ci-dessous, la colonne de siège 20 n'aurait pas la possibilité de bouger (ou « flotter ») une fois verrouillée.

Préférablement, les première et seconde électrovannes 121, 122 sont chacune pourvue d'un clapet antiretour permettant au fluide hydraulique de circuler de l'accumulateur 125 vers la chambre hydraulique supérieure 15.1 ou la chambre hydraulique inférieure 15.2 du vérin hydraulique 15 lorsque les première et seconde électrovannes 121, 122 sont désactivées.

Pour permettre le verrouillage « flottant » évoqué plus haut, à savoir un débattement contrôlé du vérin hydraulique 15 (et donc de la colonne de siège 20) par rapport au point de verrouillage, le dispositif hydraulique complémentaire 100 est prévu. Selon une variante de réalisation particulièrement préférée, telle qu'illustrée à la Figure 3, le dispositif hydraulique 100 comporte un vérin flottant 105 comprenant un piston flottant 105a et des chambres hydrauliques supérieure 105.1 et inférieure 105.2 disposées de part et d'autre du piston flottant 105a. Ces chambres hydrauliques supérieure 105.1 et inférieure 105.2 sont reliées aux chambres hydrauliques supérieure 15.1 et inférieure 15.2 du vérin hydraulique 15 de manière à permettre, lorsque le vérin hydraulique 15 est en configuration verrouillée (à savoir lorsque les électrovannes 121, 122 sont désactivées), le passage du fluide hydraulique du vérin hydraulique 15 au vérin flottant 105, et inversement. L'on comprendra que le piston flottant 105a présente une amplitude de mouvement et une capacité déterminant conjointement l'amplitude A du débattement contrôlé du vérin hydraulique 15 et de la colonne de siège 20. En effet, lorsque le piston flottant 105a arrive dans l'une de ses positions extrêmes, le piston 15a du vérin hydraulique 15 est également stoppé dans une position correspondante, verrouillée, haute, respectivement basse. Le choix des volumes des chambres hydrauliques supérieure 105.1 et inférieure 105.2, ainsi que de la course du piston flottant 105a, permet d'ajuster l'amplitude effective A du débattement contrôlé du vérin hydraulique 15, et ainsi de la colonne de siège 20.

Dans la Figure 3, l'on peut également voir que le dispositif hydraulique 100 comporte par ailleurs une chambre d'équilibrage 110, laquelle est reliée à l'accumulateur 125, de manière à soumettre le piston flottant 105a à la même pression hydraulique que celle de l'accumulateur 125.

De plus, le dispositif hydraulique comporte en outre un ressort de compression 112 exerçant une force de rappel sur le piston flottant 105a. Dans la variante de réalisation illustrée à la Figure 3, le ressort de compression 112 est agencé de sorte à rappeler le piston flottant 105a en position basse lors de la phase d'embarquement, à savoir lorsque les électrovannes 121, 122 sont activées (ouvertes). Dans cette position basse, le piston flottant 105a est ainsi en butée à une extrémité du vérin flottant 105, chambre hydraulique inférieure 105.2 vide et chambre hydraulique supérieure 105.1 pleine. Cette condition de départ implique que le mouvement de la colonne de siège 20, à partir du point de verrouillage, électrovannes 121, 122 désactivées, ne peut s'effectuer qu'en direction du bas (comme illustré dans la Figure 1A), avec une limitation en position basse fixée par l'arrivée en fin de course du piston flottant 105a, chambre hydraulique supérieure 105.1 vide et chambre hydraulique inférieure 105.2 pleine, et un retour en position haute, identique à la position de départ, chambre hydraulique supérieure 105.1 pleine et chambre hydraulique inférieure 105.2 vide.

D'autres configurations sont toutefois envisageables, en modifiant la position de départ du piston flottant 105a, par exemple en maintenant le piston flottant 105a en une position intermédiaire, entre les deux positions extrêmes. Pour ce faire, le dispositif hydraulique 100 pourrait par exemple comporter deux ressorts de compression opérant en opposition, de part et d'autre du piston flottant 105a, et agencés de sorte à rappeler le piston flottant 105a en une position intermédiaire, entre les positions haute et basse du piston flottant 105a. Dans ce contexte, il est bien évidemment possible de partir d'une position décalée du centre en utilisant des ressorts de longueurs ou de caractéristiques différentes afin d'obtenir des valeurs de déplacement vers le bas ou vers le haut asymétriques.

Il est également possible d'obtenir un effet de suspension ou amortissement progressif en montant des ressorts de rappel du piston flottant 105a dotés de caractéristiques plus « raides » de sorte que le piston flottant 105a est progressivement freiné dans sa course par l'augmentation des forces du ou des ressorts de rappel. Le système obtenu empêche ainsi le piston flottant 105a d'arriver en butée franche, limitant ainsi fortement le risque de choc.

En lieu et place de ressorts de compression, il est bien évidemment possible d'utiliser tous autres éléments de rappel adéquats, tels des ressorts en élastomère ou des ressorts pneumatiques.

La Figure 3 montre encore à titre préféré, la présence d'un régleur de débit 115 placé sur le passage du fluide hydraulique entre le vérin hydraulique 15 et le vérin flottant 105, et plus précisément dans le conduit reliant la chambre hydraulique inférieure 15.2 du vérin hydraulique 15 à la chambre hydraulique inférieure 105.2 du vérin flottant 105. Ce régleur de débit 115 permet avantageusement de régler la vitesse de déplacement du piston 15a du vérin hydraulique 15. Cette limitation de vitesse n'est effective que lorsque les électrovannes 121, 122 sont fermées (désactivées), et n'affecte en rien la vitesse de déplacement du système lors de la phase d'embarquement, lorsque le mouvement de la colonne de siège 20 doit être aisé.

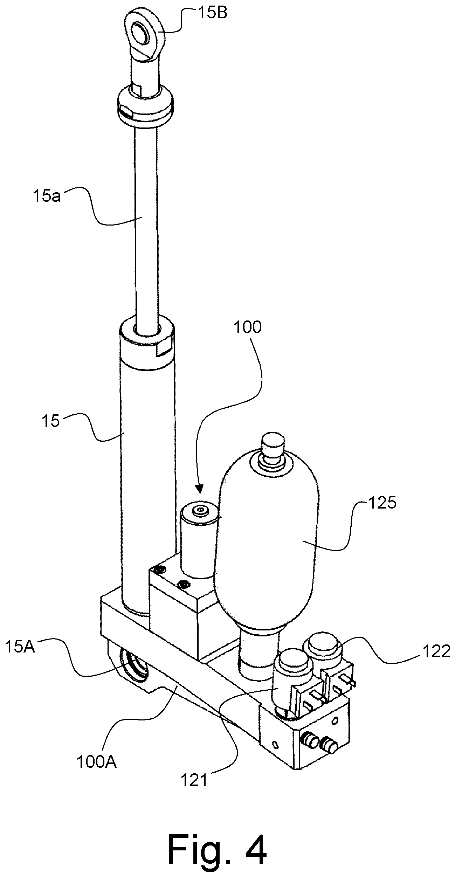

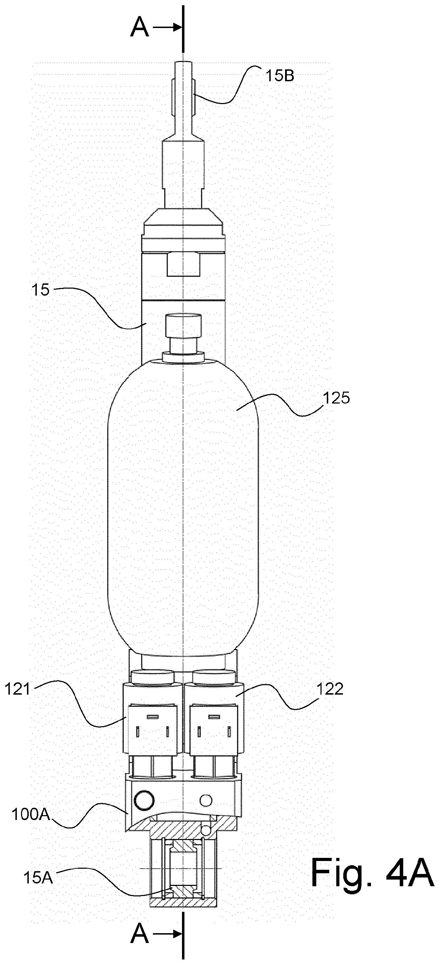

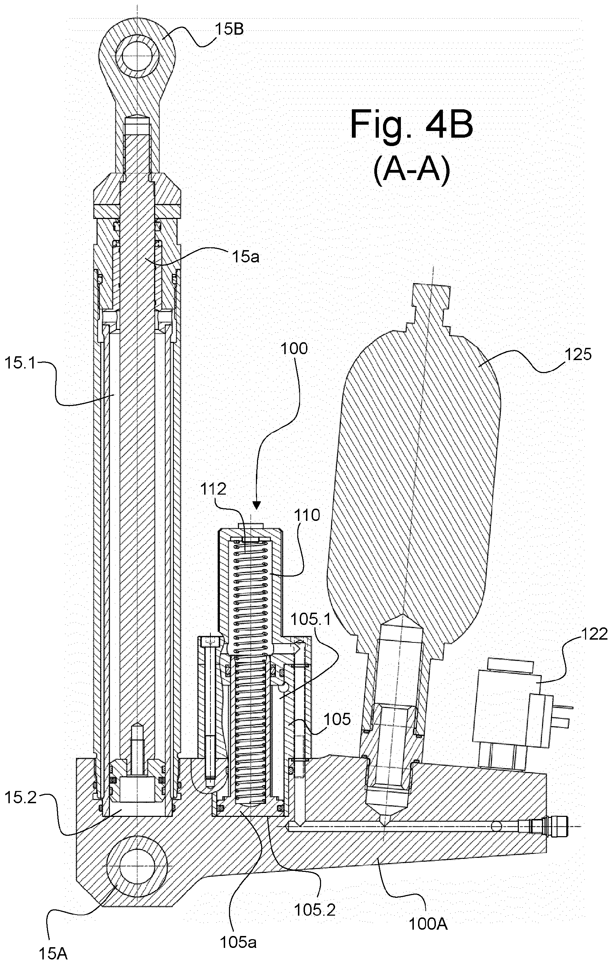

La Figure 4 montre une vue en perspective arrière du système hydraulique équipant le système de maintien de passager 1 de la Figure 1, en ce inclus le vérin hydraulique 15, le dispositif hydraulique 100, l'accumulateur 125 et les deux électrovannes 121, 122. Comme illustré, ces divers éléments sont avantageusement montés sur un même élément de support 100A qui est luimême agencé pour être monté à l'intérieur d'un logement 10A pratiqué dans la colonne fixe 10 (voir Figure 2). Cet élément de support 100A est monté dans le logement 10A de manière à permettre un mouvement de pivotement autour de l'axe coïncidant avec l'extrémité articulée inférieure 15A du vérin hydraulique 15.

Les Figures 4A et 4B sont respectivement une vue arrière et une vue en coupe (prise selon le plan de coupe A-A reporté sur la Figure 4A) du système hydraulique de la Figure 4. La vue en coupe permet en particulier d'identifier le vérin flottant 105, avec son piston flottant 105a positionné en position basse, chambre hydraulique 105.2 vide, la chambre d'équilibrage 110, placée au-dessus du piston flottant 105a et communiquant avec l'accumulateur 125, ainsi que le ressort de compression 112 agencé pour rappeler le piston flottant 105a en position basse. L'ensemble du circuit hydraulique n'est pas visible sur la Figure 4B, mais l'on comprendra que l'agencement et l'interconnexion des éléments du système hydraulique représenté est identique au schéma hydraulique de la Figure 3.

Les Figures permettent d'illustrer la relative simplicité ainsi que la compacité du système hydraulique nécessaire à l'équilibrage ainsi qu'au verrouillage « flottant » de la colonne de siège 20.

L'on comprendra de manière générale que diverses modifications et/ou améliorations évidentes pour l'homme du métier peuvent être apportées aux modes de réalisation décrits dans la présente description sans sortir du cadre de l'invention défini par les revendications annexées. En particulier, la liaison articulée et le verrouillage flottant sont deux fonctions distinctes qui peuvent être appliquées séparément l'une de l'autre, ou, très avantageusement, en combinaison.

Par ailleurs, bien que les Figures montrent un mode de réalisation où un accumulateur dédié est associé au système de maintien, d'autres solutions sont envisageables. Par exemple, dans une variante, un accumulateur centralisé, de plus grande capacité, pourrait être couplé à plusieurs systèmes de maintien, en particulier à chaque système de maintien d'une même rangée de passagers ou d'un même véhicule. En pareil cas, l'on comprendra donc que l'accumulateur ne sera plus nécessairement disposé sur et intégré à chaque système de maintien, mais sera disposé au voisinage de la rangée de passagers concernée ou sur le véhicule concerné et que l'ensemble des systèmes hydrauliques des divers systèmes de maintien seront alors couplés à un même accumulateur centralisé.

### LISTE DES SIGNES DE RÉFÉRENCE UTILISÉS DANS LA PRÉSENTE DESCRIPTION ET DANS LES DESSINS

- 1: système de maintien de passager selon un mode de réalisation de l'invention
- P: passager en posture essentiellement verticale
- A: amplitude du débattement contrôlé du vérin hydraulique 15 / de la colonne de siège 20
- 10: colonne fixe
- 10A: logement pratiqué dans la colonne fixe 10, configuré pour recevoir notamment le dispositif hydraulique 100 et l'extrémité inférieure 15A du vérin hydraulique 15
- 15: vérin hydraulique
- 15a: piston du vérin hydraulique
- 15A: extrémité inférieure du vérin hydraulique 15, articulée à la colonne fixe 10
- 15B: extrémité supérieure du vérin hydraulique 15 (extrémité supérieure du piston 15a), articulée à la colonne de siège 20
- 15.1: chambre hydraulique supérieure du vérin hydraulique 15
- 15.2: chambre hydraulique inférieure du vérin hydraulique 15
- 20: colonne de siège, déplaçable verticalement par rapport à la colonne fixe 10 afin d'ajuster la colonne de siège à la taille du passager P
- 30: liaison articulée entre la colonne fixe 10 et la colonne de siège 20 / liaison parallélogramme
- 30A: espace intercalaire de la liaison articulée 30 au travers duquel s'étend le vérin hydraulique 15
- 31: paire de leviers inférieurs de la liaison articulée 30
- 32: paire de leviers supérieurs de la liaison articulée 30
- 100: dispositif hydraulique couplé au vérin hydraulique 15
- 100A: élément de support du dispositif hydraulique 100 monté dans le logement 10A de la colonne fixe 10
- 105: vérin flottant
- 105a: piston du vérin flottant 105
- 105.1: chambre hydraulique supérieure du vérin flottant 105
- 105.2: chambre hydraulique inférieure du vérin flottant 105
- 110: chambre d'équilibrage du piston flottant 105a couplée à l'accumulateur 125
- 112: élément de rappel (par exemple ressort de compression) pour le rappel du piston flottant 105a
- 115: régleur de débit
- 121: (première) électrovanne couplée entre l'accumulateur 125 et la chambre hydraulique supérieure 15.1 du vérin hydraulique 15
- 122: (seconde) électrovanne couplée entre l'accumulateur 125 et la chambre hydraulique inférieure 15.2 du vérin hydraulique 15
- 125: accumulateur pour l'équilibrage du poids de la colonne de siège 20 (en particulier accumulateur hydropneumatique)
- 200: dispositif de retenue du passager P solidaire de la colonne de siège 20
- 201: dossier
- 201A: appui-tête
- 202: éléments de retenue latéraux
- 203: barre de sécurité frontale montée pivotant sur la colonne de siège 20
- 204: élément de retenue abdominal monté à l'extrémité distale de la barre de sécurité frontale 203
- 205: selle
- 206: harnais

## Revendications

1. Un système de maintien de passager (1) pour montagnes russes conçu afin de maintenir un passager (P) en posture essentiellement verticale, le système de maintien de passager (1) comprenant une colonne fixe (10) et une colonne de siège (20) conçue pour soutenir et retenir le passager (P), laquelle colonne de siège (20) est couplée à la colonne fixe (10) de manière à pouvoir être déplacée par rapport à la colonne fixe (10) et être ajustée à la taille du passager (P) lors d'une phase d'embarquement,
**caractérisé en ce que** la colonne de siège (20) est couplée à la colonne fixe (10) au moyen d'une liaison articulée (30) et **en ce que** le système de maintien de passager (1) comporte en outre un dispositif assurant l'équilibrage de la colonne de siège (20), lequel dispositif d'équilibrage comprend un vérin (15) fixé, à une première extrémité articulée (15A), à la colonne fixe (10) et, à une seconde extrémité articulée (15B), à la colonne de siège (20).

2. Le système de maintien de passager (1) selon la revendication 1, **caractérisé en ce que** la liaison articulée (30) comporte un jeu de leviers (31, 32) articulés sur la colonne fixe (10) et sur la colonne de siège (20) et formant une liaison parallélogramme entre la colonne fixe (10) et la colonne de siège (20).

3. Le système de maintien de passager (1) selon la revendication 1 ou 2, **caractérisé en ce que** le vérin (15) s'étend au travers d'un espace intercalaire (30A) de la liaison articulée (30).

4. Le système de maintien de passager (1) selon l'une quelconque des revendications précédentes, **caractérisé en ce que** le vérin est un vérin hydraulique (15) assurant également le blocage sélectif de la colonne de siège (20) en un point de verrouillage.

5. Le système de maintien de passager (1) selon la revendication 4, **caractérisé en ce que** le système de maintien de passager (1) comporte en outre un dispositif hydraulique (100) couplé au vérin hydraulique (15) et configuré pour assurer un débattement contrôlé du vérin hydraulique (15), et ainsi de la colonne de siège (20), par rapport au point de verrouillage.

6. Un système de maintien de passager (1) pour montagnes russes conçu afin de maintenir un passager (P) en posture essentiellement verticale, le système de maintien de passager (1) comprenant une colonne fixe (10) et une colonne de siège (20) conçue pour soutenir et retenir le passager (P), laquelle colonne de siège (20) est couplée à la colonne fixe (10) de manière à pouvoir être déplacée par rapport à la colonne fixe (10) et être ajustée à la taille du passager (P) lors d'une phase d'embarquement,
**caractérisé en ce que** le système de maintien de passager (1) comporte en outre :
- un vérin hydraulique (15) assurant l'équilibrage de la colonne de siège (20) ainsi que le blocage sélectif de la colonne de siège (20) en un point de verrouillage, lequel vérin hydraulique (15) est fixé, à une première extrémité (15A), à la colonne fixe (10) et, à une seconde extrémité (15B), à la colonne de siège (20) ; et
- un dispositif hydraulique (100) couplé au vérin hydraulique (15) et configuré pour assurer un débattement contrôlé du vérin hydraulique (15), et ainsi de la colonne de siège (20), par rapport au point de verrouillage.

7. Le système de maintien de passager (1) selon l'une quelconque des revendications 4 à 6, **caractérisé en ce que** le système de maintien de passager (1) comporte en outre un accumulateur (125) couplé au vérin hydraulique (15) et apte à générer une pression hydraulique nécessaire à l'équilibrage du poids de la colonne de siège (20), lequel accumulateur (125) est préférablement un accumulateur hydropneumatique.

8. Le système de maintien de passager (1) selon la revendication 7, **caractérisé en ce que** l'accumulateur (125) est couplé à des chambres hydrauliques supérieure (15.1) et inférieure (15.2) du vérin hydraulique (15), l'accumulateur (125) étant couplé à la chambre hydraulique supérieure (15.1) du vérin hydraulique (15) via une première électrovanne (121) et à la chambre hydraulique inférieure (15.2) du vérin hydraulique (15) via une seconde électrovanne (122),
**en ce que** les première et seconde électrovannes (121, 122) sont activables, lors de la phase d'embarquement du passager (P), afin de permettre le passage de fluide hydraulique de la chambre hydraulique inférieure (15.2) à la chambre hydraulique supérieure (15.1) du vérin hydraulique (15), et inversement, plaçant ainsi le vérin hydraulique (15) en configuration déverrouillée autorisant l'ajustement de la colonne de siège (20) à la taille du passager (P),
et **en ce que** les première et seconde électrovannes (121, 122) sont désactivables afin d'empêcher le passage de fluide hydraulique de la chambre hydraulique inférieure (15.2) à la chambre hydraulique supérieure (15.1) du vérin hydraulique (15), et inversement, plaçant ainsi le vérin hydraulique (15) en configuration verrouillée.

9. Le système de maintien de passager (1) selon la revendication 8, **caractérisé en ce que** les première et seconde électrovannes (121, 122) sont chacune pourvue d'un clapet antiretour permettant au fluide hydraulique de circuler de l'accumulateur (125) vers la chambre hydraulique supérieure (15.1) ou la chambre hydraulique inférieure (15.2) du vérin hydraulique (15) lorsque les première et seconde électrovannes (121, 122) sont désactivées.

10. Le système de maintien de passager (1) selon la revendication 8 ou 9, en dépendance de la revendication 5 ou 6, **caractérisé en ce que** le dispositif hydraulique (100) comporte un vérin flottant (105) comprenant un piston flottant (105a) et des chambres hydrauliques supérieure (105.1) et inférieure (105.2) disposées de part et d'autre du piston flottant (105a), lesquelles sont reliées aux chambres hydrauliques supérieure (15.1) et inférieure (15.2) du vérin hydraulique (15) de manière à permettre, lorsque le vérin hydraulique (15) est en configuration verrouillée, le passage du fluide hydraulique du vérin hydraulique (15) au vérin flottant (105) et inversement, le piston flottant (105a) présentant une amplitude de mouvement et une capacité déterminant l'amplitude (A) du débattement contrôlé du vérin hydraulique (15) et de la colonne de siège (20),
et **en ce que** le dispositif hydraulique (100) comporte par ailleurs préférablement une chambre d'équilibrage (110) soumettant le piston flottant (105a) à la même pression hydraulique que celle de l'accumulateur (125).

11. Le système de maintien de passager (1) selon la revendication 10, **caractérisé en ce que** le dispositif hydraulique (100) comporte en outre au moins un élément de rappel (112) exerçant une force de rappel sur le piston flottant (105a), tels un ressort de compression, un ressort en élastomère ou un ressort pneumatique.

12. Le système de maintien de passager (1) selon la revendication 11, **caractérisé en ce que** le dispositif hydraulique (100) comporte un unique élément de rappel (112) agencé de sorte à rappeler le piston flottant (105a) en une position basse lors de la phase d'embarquement,
ou **en ce que** le dispositif hydraulique (100) comporte deux éléments de rappel opérant en opposition et agencés de sorte à rappeler le piston flottant (105a) en une position intermédiaire, entre des positions haute et basse, lors de la phase d'embarquement.

13. Le système de maintien de passager (1) selon l'une quelconque des revendications 10 à 12, **caractérisé en ce que** le système de maintien de passager (1) comporte en outre un régleur de débit (115) placé sur le passage du fluide hydraulique entre le vérin hydraulique (15) et le vérin flottant (105), en particulier dans un conduit reliant la chambre hydraulique inférieure (15.2) du vérin hydraulique (15) à la chambre hydraulique inférieure (105.2) du vérin flottant (105).

14. Le système de maintien de passager (1) selon l'une quelconque des revendications 5 à 13, en dépendance de la revendication 5 ou 6, **caractérisé en ce que** le système de maintien de passager (1) comporte en outre des moyens configurés de sorte à amortir le débattement contrôlé du vérin hydraulique (15).

15. Montagnes russes comprenant au moins un système de maintien de passager (1) selon l'une quelconque des revendications précédentes.

## Patentansprüche

1. Ein Passagierrückhaltesystem (1) für eine Achterbahn, das dazu vorgesehen ist, einen Passagier (P) in einer im Wesentlichen aufrechten Haltung zu halten, wobei das Passagierrückhaltesystem (1) eine feste Säule (10) und eine Sitzsäule (20), die dazu vorgesehen ist, den Passagier (P) zu stützen und zu halten, umfasst, wobei die Sitzsäule (20) so mit der festen Säule (10) gekoppelt ist, dass sie relativ zur festen Säule (10) verschiebbar und während einer Einstiegsphase auf die Größe des Passagiers (P) einstellbar ist,
**dadurch gekennzeichnet, dass** die Sitzsäule (20) mit der festen Säule (10) mit Hilfe einer gelenkigen Verbindung (30) verbunden ist und dass das Passagierrückhaltesystem (1) ferner eine Vorrichtung zum Ausgleichen der Sitzsäule (20) aufweist, wobei die Ausgleichsvorrichtung einen Zylinder (15) umfasst, der mit einem ersten gelenkigen Ende (15A) an der festen Säule (10) und mit einem zweiten gelenkigen Ende (15B) an der Sitzsäule (20) befestigt ist.

2. Das Passagierrückhaltesystem (1) nach Anspruch 1, **dadurch gekennzeichnet, dass** die gelenkige Verbindung (30) einen Satz von Hebeln (31, 32) umfasst, die an der festen Säule (10) und an der Sitzsäule (20) angelenkt sind und eine Parallelogrammverbindung zwischen der festen Säule (10) und der Sitzsäule (20) ausbilden.

3. Das Passagierrückhaltesystem (1) nach Anspruch 1 oder 2, **dadurch gekennzeichnet, dass** sich der Zylinder (15) durch einen Zwischenraum (30A) der gelenkigen Verbindung (30) erstreckt.

4. Das Passagierrückhaltesystem (1) nach einem der vorangehenden Ansprüche, **dadurch gekennzeichnet, dass** der Zylinder ein Hydraulikzylinder (15) ist, der auch eine selektive Verriegelung der Sitzsäule (20) an einem Verriegelungspunkt gewährleistet.

5. Das Passagierrückhaltesystem (1) nach Anspruch 4, **dadurch gekennzeichnet, dass** das Passagierrückhaltesystem (1) ferner eine hydraulische Vorrichtung (100) aufweist, die mit dem Hydraulikzylinder (15) gekoppelt und konfiguriert ist, um eine kontrollierte Auslenkung des Hydraulikzylinders (15) und damit der Sitzsäule (20) relativ zum Verriegelungspunkt zu gewährleisten.

6. Das Passagierrückhaltesystem (1) für eine Achterbahn, das dazu vorgesehen ist, einen Passagier (P) in einer im Wesentlichen aufrechten Haltung zu halten, wobei das Passagierrückhaltesystem (1) eine feste Säule (10) und eine Sitzsäule (20), die dazu vorgesehen ist, den Passagier (P) zu stützen und zu halten, umfasst, wobei die Sitzsäule (20) so mit der festen Säule (10) gekoppelt ist, dass sie relativ zur festen Säule (10) verschiebbar und während einer Einstiegsphase auf die Größe des Passagiers(P) einstellbar ist,
**dadurch gekennzeichnet, dass** das Passagierrückhaltesystem (1) ferner Folgendes aufweist:
- einen Hydraulikzylinder (15) zum Ausgleichen der Sitzsäule (20) und zum selektiven Verriegeln der Sitzsäule (20) an einem Verriegelungspunkt, wobei der Hydraulikzylinder (15) mit einem ersten Ende (15A) an der festen Säule (10) und mit einem zweiten Ende (15B) an der Sitzsäule (20) befestigt ist; und
- eine hydraulische Vorrichtung (100), die mit dem Hydraulikzylinder (15) gekoppelt und konfiguriert ist, um eine kontrollierte Auslenkung des Hydraulikzylinders (15) und damit der Sitzsäule (20) relativ zum Verriegelungspunkt zu gewährleisten.

7. Das Passagierrückhaltesystem (1) nach einem der Ansprüche 4 bis 6, **dadurch gekennzeichnet, dass** das Passagierrückhaltesystem (1) ferner einen Speicher (125) aufweist, der mit dem Hydraulikzylinder (15) gekoppelt und in der Lage ist, einen hydraulischen Druck zu erzeugen, der erforderlich ist, um das Gewicht der Sitzsäule (20) auszugleichen, wobei der Speicher (125) vorzugsweise ein hydropneumatischer Speicher ist.

8. Das Passagierrückhaltesystem (1) nach Anspruch 7, **dadurch gekennzeichnet, dass** der Speicher (125) mit einer oberen (15.1) und einer unteren Hydraulikkammer (15.2) des Hydraulikzylinders (15) gekoppelt ist, wobei der Speicher (125) mit der oberen Hydraulikkammer (15.1) des Hydraulikzylinders (15) über ein erstes Elektroventil (121) und mit der unteren Hydraulikkammer (15.2) des Hydraulikzylinders (15) über ein zweites Elektroventil (122) gekoppelt ist,
dass das erste und das zweite Elektroventil (121, 122) während der Einstiegsphase des Passagiers (P) aktivierbar sind, um den Durchfluss von Hydraulikfluid aus der unteren Hydraulikkammer (15.2) in die obere Hydraulikkammer (15.1) des Hydraulikzylinders (15) und umgekehrt zu ermöglichen, wodurch der Hydraulikzylinder (15) in eine entriegelte Konfiguration gebracht wird, die die Einstellung der Sitzsäule (20) auf die Größe des Passagiers (P) ermöglicht, und
dass das erste und das zweite Elektroventils (121, 122) deaktivierbar sind, um den Durchfluss von Hydraulikfluid aus der unteren Hydraulikkammer (15.2) in die obere Hydraulikkammer (15.1) des Hydraulikzylinders (15) und umgekehrt zu verhindern und so den Hydraulikzylinder (15) in eine verriegelte Konfiguration zu bringen.

9. Das Passagierrückhaltesystem (1) nach Anspruch 8, **dadurch gekennzeichnet, dass** das erste und das zweite Elektroventil (121, 122) jeweils mit einem Rückschlagventil ausgestattet sind, das es ermöglicht, dass Hydraulikfluid aus dem Speicher (125) in die obere Hydraulikkammer (15.1) oder die untere Hydraulikkammer (15.2) des Hydraulikzylinders (15) fließt, wenn das erste und das zweite Elektroventil (121, 122) deaktiviert sind.

10. Das Passagierrückhaltesystem (1) nach Anspruch 8 oder 9, soweit abhängig von Anspruch 5 oder 6, **dadurch gekennzeichnet, dass** die hydraulische Vorrichtung (100) einen Schwimmzylinder (105) aufweist, der einen schwimmenden Kolben (105a) und eine obere (105.1) und eine untere Hydraulikkammer (105.2) umfasst, die auf beiden Seiten des schwimmenden Kolbens (105a) angeordnet und mit der oberen (15.1) und unteren Hydraulikkammer (15.2) des Hydraulikzylinders (15) verbunden sind, um den Durchfluss des Hydraulikfluids aus dem Hydraulikzylinder (15) in den Schwimmzylinder (105) und umgekehrt ermöglichen, wenn sich der Hydraulikzylinder (15) in der verriegelten Konfiguration befindet, wobei der schwimmende Kolben (105a) eine Bewegungsamplitude und eine Kapazität aufweist, die die Amplitude (A) der kontrollierten Auslenkung des Hydraulikzylinders (15) und der Sitzsäule (20) bestimmen, und
dass die hydraulische Vorrichtung (100) außerdem vorzugsweise eine Ausgleichskammer (110) aufweist, die den schwimmenden Kolben (105a) mit demselben hydraulischen Druck wie dem des Speichers (125) beaufschlagt.

11. Das Passagierrückhaltesystem (1) nach Anspruch 10, **dadurch gekennzeichnet, dass** die hydraulische Vorrichtung (100) ferner zumindest ein Rückstellelement (112) aufweist, das eine Rückstellkraft auf den schwimmenden Kolben (105a) ausübt, wie etwa eine Druckfeder, eine Elastomerfeder oder eine Luftfeder.

12. Das Passagierrückhaltesystem (1) nach Anspruch 11, **dadurch gekennzeichnet, dass** die hydraulische Vorrichtung (100) ein einziges Rückstellelement (112) aufweist, das so angeordnet ist, dass es den schwimmenden Kolben (105a) während der Einstiegsphase in eine untere Position zurückstellt, oder
dass die hydraulische Vorrichtung (100) zwei Rückstellelemente aufweist, die gegenläufig wirken und so angeordnet sind, dass sie den schwimmenden Kolben (105a) während der Einstiegsphase in eine Zwischenposition zwischen einer oberen und einer unteren Position zurückstellen.

13. Das Passagierrückhaltesystem (1) nach einem der Ansprüche 10 bis 12, **dadurch gekennzeichnet, dass** das Passagierrückhaltesystem (1) ferner einen Durchflussregler (115) aufweist, der am Durchlass des Hydraulikfluids zwischen dem Hydraulikzylinder (15) und dem Schwimmzylinder (105), insbesondere in einer Leitung, die die untere Hydraulikkammer (15.2) des Hydraulikzylinders (15) mit der unteren Hydraulikkammer (105.2) des Schwimmzylinders (105) verbindet, angeordnet ist.

14. Das Passagierrückhaltesystem (1) nach einem der Ansprüche 5 bis 13, soweit von Anspruch 5 oder 6 abhängig, **dadurch gekennzeichnet, dass** das Passagierrückhaltesystem (1) ferner Mittel aufweist, die konfiguriert sind, um die kontrollierte Auslenkung des Hydraulikzylinders (15) zu dämpfen.

15. Eine Achterbahn, umfassend zumindest ein Passagierrückhaltesystem (1) nach einem der vorangehenden Ansprüche.

## Claims

1. A passenger restraint system (1) for a roller coaster, designed to maintain a passenger (P) in an essentially upright posture, the passenger restraint system (1) comprising a fixed column (10) and a seat column (20) designed to support and hold the passenger (P), which seat column (20) is coupled to the fixed column (10) so as to be movable relative to the fixed column (10) and to be adjustable to the size of the passenger (P) during an embarkation phase,
**characterized in that** the seat column (20) is coupled to the fixed column (10) by means of an articulated linkage (30), and **in that** the passenger restraint system (1) further comprises a device for balancing the seat column (20), which balancing device comprises a cylinder (15) fixed, at a first articulated end (15A), to the fixed column (10) and, at a second articulated end (15B), to the seat column (20).

2. The passenger restraint system (1) according to claim 1, **characterized in that** the articulated linkage (30) comprises a set of levers (31, 32) articulated on the fixed column (10) and on the seat column (20) and forming a parallelogram linkage between the fixed column (10) and the seat column (20).

3. The passenger restraint system (1) according to claim 1 or 2, **characterized in that** the cylinder (15) extends through an intermediate space (30A) of the articulated linkage (30).

4. The passenger restraint system (1) according to any one of the preceding claims, **characterized in that** the cylinder is a hydraulic cylinder (15) that also provides selective locking of the seat column (20) at a locking point.

5. The passenger restraint system according to claim 4, **characterized in that** the passenger restraint system (1) further comprises a hydraulic device (100) coupled to the hydraulic cylinder (15) and configured to provide controlled displacement of the hydraulic cylinder (15), and thus of the seat column (20), relative to the locking point.

6. A passenger restraint system (1) for a roller coaster, designed to maintain a passenger (P) in an essentially upright posture, the passenger restraint system (1) comprising a fixed column (10) and a seat column (20) designed to support and hold the passenger (P), which seat column (20) is coupled to the fixed column (10) so as to be movable relative to the fixed column (10) and to be adjustable to the size of the passenger (P) during an embarkation phase,
**characterized in that** the passenger restraint system (1) further comprises:
- a hydraulic cylinder (15) for balancing the seat column (20) and for selectively locking the seat column (20) at a locking point, which hydraulic cylinder (15) is fixed, at a first end (15A), to the fixed column (10) and, at a second end (15B), to the seat column (20); and
- a hydraulic device (100) coupled to the hydraulic cylinder (15) and configured to provide controlled displacement of the hydraulic cylinder (15), and thus of the seat column (20), relative to the locking point.

7. The passenger restraint system (1) according to any one of claims 4 to 6, **characterized in that** the passenger restraint system (1) further comprises an accumulator (125) coupled to the hydraulic cylinder (15) and capable of generating a hydraulic pressure necessary for balancing the weight of the seat column (20), which accumulator (125) is preferably a hydropneumatic accumulator.

8. The passenger restraint system (1) according to claim 7, **characterized in that** the accumulator (125) is coupled to upper and lower hydraulic chambers (15.1, 15.2) of the hydraulic cylinder (15), the accumulator (125) being coupled to the upper hydraulic chamber (15.1) of the hydraulic cylinder (15) via a first electrovalve (121) and to the lower hydraulic chamber (15.2) of the hydraulic cylinder (15) via a second electrovalve (122),
**in that** the first and second electrovalves (121, 122) can be activated, during the embarkation phase of the passenger (P), in order to allow the passage of hydraulic fluid from the lower hydraulic chamber (15.2) to the upper hydraulic chamber of the hydraulic cylinder (15.1), and vice versa, thus placing the hydraulic cylinder (15) in an unlocked configuration allowing the adjustment of the seat column (20) to the size of the passenger (P),
and **in that** the first and second electrovalves (121, 122) can be deactivated in order to prevent the passage of hydraulic fluid from the lower hydraulic chamber (15.2) to the upper hydraulic chamber (15.1) of the hydraulic cylinder, and vice versa, thus placing the hydraulic cylinder (15) in a locked configuration.

9. The passenger restraint system (1) according to claim 8, **characterized in that** the first and second electrovalves (121, 122) are each provided with a non-return valve allowing the hydraulic fluid to circulate from the accumulator (125) to the upper hydraulic chamber (15.1) or the lower hydraulic chamber (15.2) of the hydraulic cylinder (15) when the first and second electrovalves (121, 122) are deactivated.

10. The passenger restraint system according to claim 8 or 9, when depending in claim 5 or 6, **characterized in that** the hydraulic device (100) comprises a floating cylinder (105) comprising a floating piston (105a) and upper and lower hydraulic chambers (105.1, 105.2) disposed on either side of the floating piston (105a), which chambers are connected to the upper and lower hydraulic chambers (15.1, 15.2) of the hydraulic cylinder (15) so as to allow, when the hydraulic cylinder (15) is in the locked configuration, the passage of the hydraulic fluid from the hydraulic cylinder (15) to the floating cylinder (105a), and vice versa, the floating piston (105a) having an amplitude of movement and a capacity determining the amplitude (A) of the controlled displacement of the hydraulic cylinder (15) and of the seat column (20),
and **in that** the hydraulic device (100) preferably further comprises a balancing chamber (110) subjecting the floating piston (105a) to the same hydraulic pressure as that of the accumulator (125).

11. The passenger restraint system (1) according to claim 10, **characterized in that** the hydraulic device (100) further comprises at least one biasing element (112) exerting a return force on the floating piston (105a), such as a compression spring, an elastomer spring or a pneumatic spring.

12. The passenger restraint system (1) according to claim 11, **characterized in that** the hydraulic device (100) comprises a single biasing element (112) arranged so as to return the floating piston (105a) to a lower position during the embarkation phase,
or **in that** the hydraulic device (100) comprises two biasing elements operating in opposition and arranged in such a way as to return the floating piston (105a) to an intermediate position between upper and lower positions during the embarkation phase.

13. The passenger restraint system (1) according to any one of claims 10 to 12, **characterized in that** the passenger restraint system (1) further comprises a flow regulator (115) placed on the path of the hydraulic fluid between the hydraulic cylinder (15) and the floating cylinder (105a), in particular in a conduit connecting the lower hydraulic chamber (15.2) of the hydraulic cylinder (15) to the lower hydraulic chamber (105.2) of the floating cylinder (105).

14. The passenger restraint system (1) according to any one of claims 5 to 13, when depending on claim 5 or 6, **characterized in that** the passenger restraint system (1) further comprises means configured to damp the controlled displacement of the hydraulic cylinder (15).

15. A roller coaster comprising at least one passenger restraint system (1) according to any one of the preceding claims.
